# EUROPÄISCHE PATENTSCHRIFT

(11) **EP 0 736 233 B1**
(45) Veröffentlichungstag und Bekanntmachung des Hinweises auf die Patenterteilung: **03.03.1999**
(21) Anmeldenummer: 95933413.7
(22) Anmeldetag: 21.09.1995
(51) Int. Cl.: H02K 7/08, H02K 7/14, F04B 17/03, B60T 8/40

(54) **ELEKTROMOTOR FÜR EIN TRIEBWERK, INSBESONDERE FÜR EINE PUMPE**
ELECTRIC MOTOR FOR A DRIVE, ESPECIALLY FOR A PUMP
MOTEUR ELECTRIQUE POUR MECANISME D'ENTRAINEMENT, NOTAMMENT POUR UNE POMPE

(30) Priorität: 23.09.1994 DE 4433970
(43) Veröffentlichungstag der Anmeldung: 09.10.1996
(73) Patentinhaber: Continental Teves AG & Co. oHG, 60488 Frankfurt (DE)
(72) Erfinder: VOLZ, Peter, D-64291 Darmstadt (DE); REINARTZ, Hans-Dieter, D-60439 Frankfurt am Main (DE); DINKEL, Dieter, D-65817 Eppstein (DE)
(86) Internationale Anmeldenummer: EP9503730
(87) Internationale Veröffentlichungsnummer: WO9609681

(56) Entgegenhaltungen:
- DE-A- 4 235 962
- DE-A- 4 241 827
- DE-U- 9 406 702

## Beschreibung

Die Erfindung bezieht sich auf einen Elektromotor für ein Triebwerk, insbesondere für eine Pumpe mit einer Welle, die in einem Motorgehäuse angeordnet ist und durch einen kreisförmigen zentralen Durchbruch in einem Schild hindurchgeführt ist, wobei der Außenrand des Schildes eine Führung für das Motorgehäuse bildet und der Schild eine radial ausgerichtete Anlagefläche aufweist, um eine in radialer Richtung wirkende formschlüssige Verbindung zwischen dem Schild und dem Gehäuse des Triebwerkes herzustellen.

Ein derartiger Elektromotor ist in der DE-OS 42 35 962 vorgestellt. Der Elektromotor wird auf eine flache Flanschfläche eines Pumpengehäuses aufgesetzt. Die Motorwelle wird von mindestens einem Lager geführt, das im Pumpengehäuse angeordnet ist. Dadurch ist die Motorwelle im Bezug zum Pumpengehäuse ausgerichtet. Es besteht nun die Notwendigkeit, das Motorgehäuse zentriert zur Motorwelle auszurichten. Dazu weist der Motor einen Schild auf, der am Pumpengehäuse flächig anliegt und an seinem Außenrand eine Führung für das Motorgehäuse bildet. Das oben erwähnte Lager ragt über eine Teillänge aus dem Pumpengehäuse heraus, so daß der Lagerschild, der eine entsprechende zentrale Vertiefung aufweist, auf das herausragende Lager aufsteckbar ist. Dadurch ist der Schild und das vom Schild geführte Gehäuse zentrisch zur Motorwelle ausgerichtet.

Diese Anordnung hat noch einen weiteren Vorteil. Gehäuse, Welle, Schild und Lager werden zunächst zu einer Baueinheit zusammengesetzt. Diese Baueinheit kann auf ihre Funktionstüchtigkeit hin geprüft werden, da die Motorwelle im Bereich des Schildes gelagert ist. Sodann wird die Baueinheit auf das Pumpengehäuse gesetzt, wobei das Lager seine Position im Pumpengehäuse einnimmt und somit in der Lage ist, die beim Betrieb des Motorpumpenaggregats auf die Motorwelle auftretenden Radialkräfte in das Pumpengehäuse einzuleiten.

Die Anordnung hat aber insbesondere den Nachteil, daß das aus dem Schild herausragende Lager beim Transport leicht beschädigt werden kann. Die Aufgabe der Erfindung ist es daher eine Anordnung zu schaffen, bei der das Lager vor Beschädigung geschützt wird, gleichzeitig aber gewährleistet ist, daß das Motorgehäuse radial zur Motorwelle ausgerichtet werden kann und daß der Motor als selbständige Baueinheit getestet werden kann.

Dazu wird vorgeschlagen, daß eine Elektromotor gemäß dem Oberbegriff durch die folgenden Merkmale weitergebildet wird. Der Durchmesser des Durchbruchs wird dem Durchmesser der Motorwelle angepaßt, so daß die innere Fläche des Durchbruchs als Lager für die Welle dient, weiterhin wird eine Anlagefläche am Außenrand eines Vorsprungs des Schildes im Bereich des Durchbruches ausgebildet.

Vorzugsweise ist dieser Vorsprung koaxial zum Durchbruch ausgebildet und hat die Form eines Rings, dessen äußere Mantelfläche die Anschlagfläche bildet und dessen innere Mantelfläche als Lagerfläche zur Anlage an die Motorwelle gelangt.
Diese Konstruktion ermöglicht es, daß das Hauptlager in das Triebwerkgehäuse eingesetzt und die Elektromotorbaueinheit ohne dieses Lager zusammengesetzt werden kann. Die als Gleitlager ausgebildete Fläche am Innenrand des Schildes, reicht aus, um die Motorwelle für einen Probelauf zu lagern.

Das Hauptlager kann damit unabhängig vom Motor ins Pumpengehäuse eingesetzt werden und ist dort vor Beschädigungen gesichert.

Das Pumpengehäuse weist entsprechende Vertiefungen auf, in denen der Vorsprung des Schildes eingesetzt werden kann, so daß das Motorgehäuse und der Schild in radialer Richtung gegeneinander fixiert sind.

Vorzugsweise weist die Stirnfläche des Vorsprungs zumindest in Teilbereichen Anlagefläche auf, die nach der Montage des Elektromotors auf das Pumpengehäuse zur Anlage an den Außenring des Hauptlagers gelangen und es in axialer Richtung im Pumpengehäuse fixieren.

Weiterhin entspricht der Durchmesser des Vorsprungs dem Außendurchmesser des Lagers, so daß im Pumpengehäuse für Lager und Vorsprung eine Sackbohrung mit einheitlichem Durchmesser vorgesehen werden kann.

Der Schild kann auch als Bürstentrageplatte ausgebildet werden, wie dies in der DE-OS 42 35 962 vorgeschlagen ist. Es kann aber auch eine gesonderte Bürstentrageplatte vorgesehen werden, die auf Vorsprünge aufliegt, die auf einem in axialer Richtung verlaufenden Erhöhung des Außenrandes des Schildes ausgebildet sind. Vorzugsweise sind die Bürsten an der Unterseite der Bürstentrageplatte befestigt, so daß die Bürsten zwischen Trageplatte und Schild angeordnet sind.

Die Erfindung wird im folgenden anhand eines Ausführunsbeispiels näher erläutert.

Das Ausführungsbeispiel ist dargestellt in einer Figur, die einen Schnitt durch einen Elektromotor/Pumpenaggregat zeigt. Der Elektromotor ist als ganzes mit 1 die Pumpe als ganzes mit 2 bezeichnet. Der Elektromotor 1 weist ein Gehäuse 3 auf, das aus einem zylinderförmigen Topf besteht, der zu einer Seite hin offen ist. Diese Seite wird durch ein Schild 4 verschlossen.

An seiner Innenseite trägt das Gehäuse 3 Permanentmagnete 5, die segmentförmig ausgebildet sind und mit dem Gehäuse 3 verklebt oder anderweitig verbunden sind. Das Gehäuse 3 selbst besteht aus magnetisch leitendem Material, so daß es den magnetischen Rückschluß sicherstellt.

Im Zentrum des Gehäuses 3 ist eine Motorwelle 6 angeordnet. Diese wird unter anderem von einem Lager 7, das im Boden 8 des Gehäuses 3 angeordnet ist, getragen. Innerhalb des Gehäuses 3 trägt die Welle 6 einen Anker 9 mit Wicklungen 10. Außerdem ist ein Kommuntator 11 vorgesehen, der sich nahe dem offenen Ende des Gehäuses 3 befindet. Die Anker und die Wicklungen sowie der Kommuntator sind von üblicher Bauart insbesondere von der Bauart, wie sie für Gleichstromelektromotoren vorgesehen ist, so daß eine nähere Erläuterung an dieser Stelle nicht notwendig ist.

Das offene Ende des Gehäuses 3 wird, wie schon erläutert, durch ein Schild 4 verschlossen. Der Schild 4 weist einen zentralen Durchbruch 20 auf, durch den die Motorwelle 6 hindurch nach außen geführt ist. Der Durchmesser des Durchbruchs entspricht im wesentlichen dem Durchmesser der Welle 6, so daß die Mantelfläche (Gleitfläche) 21 des Durchbruchs in Anlage an die Mantelfläche der Welle 6 gelangt. Auf diese Weise ist ein Gleitlager gebildet. Im Bereich des Durchbruchs 20 ist der Schild 4, der ansonsten im wesentlichen flach ist, verdickt. Es liegt somit ein nach außen weisender Vorsprung 22 vor, der eine im wesentlichen ringförmige Gestalt hat. Die Innenfläche des Rings ergibt einen Beitrag zur Gleitfläche 21 des Durchbruchs. Die äußere Mantelfläche 23 des Rings ist in einer Bohrung 24 des Pumpengehäuses eingesetzt. Da der Durchmesser der Bohrung 24 dem Außendurchmesser des Rings 22 entspricht, kann der Schild 4 auf der Flanschfläche 25 des Pumpengehäuses in radialer Richtung fixiert werden.

Der Schild 4 weist an seinem Außenrand einen Kragen 26 auf, der sich in das Innere des Gehäuses 3 erstreckt. Der Außendurchmesser des Kragens 26 entspricht im wesentlichen dem Innendurchmesser des Gehäuses 3, so daß das Gehäuse 3 nahezu ohne Spiel auf den Kragen 26 aufgeschoben werden kann, wodurch sich eine Fixierung des Gehäuses dem Schild 4 gegenüber ergibt.

An der Innenseite des Kragens 26 ist eine umlaufende Kante 27 vorgesehen, auf der eine Bürstentrageplatte 28 aufliegt. Auf der Bürstentrageplatte 28 sind mehrere Bürsten 29 befestigt, wobei die Bürsten 29 unterhalb der Bürstentrageplatte 28 angeordnet ist, also zwischen der Bürstentrageplatte 28 und dem Schild 4.

Das Pumpengehäuse 30 ist im wesentlichen ein quaderförmiger Block, der nur abschnittsweise dargesellt ist, der neben den Pumpenkolben 41 nicht dargestellte Ventile und Speicher aufnimmt.

Eine Grundfläche des Quaders bildet eine Flanschfläche 25 für den Elektromotor. Senkrecht zu dieser Flanschfläche 25 erstreckt sich eine gestufte Sackbohrung in das Innere des Quaders hinein.

Die äußere erste Stufe 24 nimmt ein Hauptlager 31 auf, wobei der Durchmesser dieser Stufe 24 dem Außendurchmesser des Lagers 31 entspricht.

In eine zweite Stufe 32 münden senkrecht zur Sackbohrung Bohrungen 40 ein, die Pumpenkolben 41 führen. Nach dem Zusammenbau von Elektromotor und Pumpe, befindet sich im Bereich dieser Stufe 32 ein Exzenter 34, der in Verlängerung der Motorwelle 6 ausgebildet ist. Eine dritte Stufe 35, nimmt, was hier nicht näher dargestellt ist, ein weiteres Lager auf, in dem ein Endzapfen der Motorwelle 6 lagert.

Auf dem Exzenter 34 befindet sich ein Wälzlager, dessen Außenring 36 in Anlage gelangt an den Innenring des Lagers 31.

Zur Montage des Elektromotors/Pumpenaggregats wird wie folgt vorgegangen.

Zunächst wird der Elektromotor montiert, wobei die mit dem Anker 9 und Kollektor 11 versehene Welle 6 in das Gehäuse 3 eingesetzt wird. Sodann werden auf den Schild 4 die Bürstentrageplatte 28 mit den Bürsten 29 aufgesetzt und der Schild in das offene Ende des Gehäuses 3 eingesetzt, wobei die Motorwelle 6 durch den Durchbruch 20 hindurchgeführt wird.

Vor dem Zusammenbau mit der Pumpe ist die Motorwelle 6 im Motorlager 7 sowie durch das Gleitlager 21 gehalten.

Da das Lagerschild aus Kunststoff besteht, sind die Lagereigenschaften des Gleitlagers 21 nicht für den Dauerbetrieb geeignet, wohl aber für ein Probebetrieb, um die Funktionsfähigkeit des Elektromotors 1 zu überprüfen.

Das Pumpengehäuse wird wie folgt vorbereitet.

Zunächst wird in die letzte Stufe 35 des Sackloches ein Lager eingesetzt, sodann in die zweite Stufe 32 das Wälzlager für den Exzenter eingelegt. Sodann wird in der ersten Stufe 24 das Hauptlager 31 eingesetzt.

Nun kann der Elektromotor 1 mit der Pumpe 2 verbunden werden. Dazu wird der komplettierte Elektromotor 1 auf die Flanschfläche 25 aufgesetzt. Das aus dem Motorgehäuse 3 herausragende Ende der Motorwelle 6 befindet sich innerhalb des Pumpengehäuses 30. Die Motorwelle 6 wird vom Hauptlager 31 getragen. Das Gleitlager 21 trägt nun nicht mehr zur Lagerung der Motorwelle bei.

Beim Aufsetzen des Elektromotors 1 auf die Flanschfläche 25 gelangt der Vorsprung 22 in die erste Bohrungsstufe 24, so daß sich die Außenfläche 23 des Vorsprungs 22 an die Wand der ersten Bohrungsstufe 24 anlegen. Damit ergibt sich eine radiale Fixierung des Schildes und, da das Motorgehäuse 3 gegenüber dem Schild fixiert ist, auch eine radiale Ausrichtung des Motorgehäuses 3 gegenüber der Welle 6.

### Bezugszeichenliste

- 1: Elektromotor
- 2: Pumpe
- 3: Gehäuse
- 4: Schild
- 5: Permanentmagnet
- 6: Welle
- 7: Motorlager

- 9: Anker
- 10: Wicklung
- 11: Kollektor

- 20: Durchbruch
- 21: Gleitflächen
- 22: Vorsprung
- 23: Außenfläche
- 24: erste Bohrungsstufe
- 25: Flanschfläche
- 26: Kragen
- 27: Absatz
- 28: Bürstentrageplatte
- 29: Bürsten
- 30: Pumpengehäuse
- 31: Hauptlager
- 32: zweite Bohrungsstufe
- 34: Exzenter
- 35: dritte Bohrungsstufe
- 36: Außenring/Wälzlager

- 40: Bohrung
- 41: Pumpenkolben

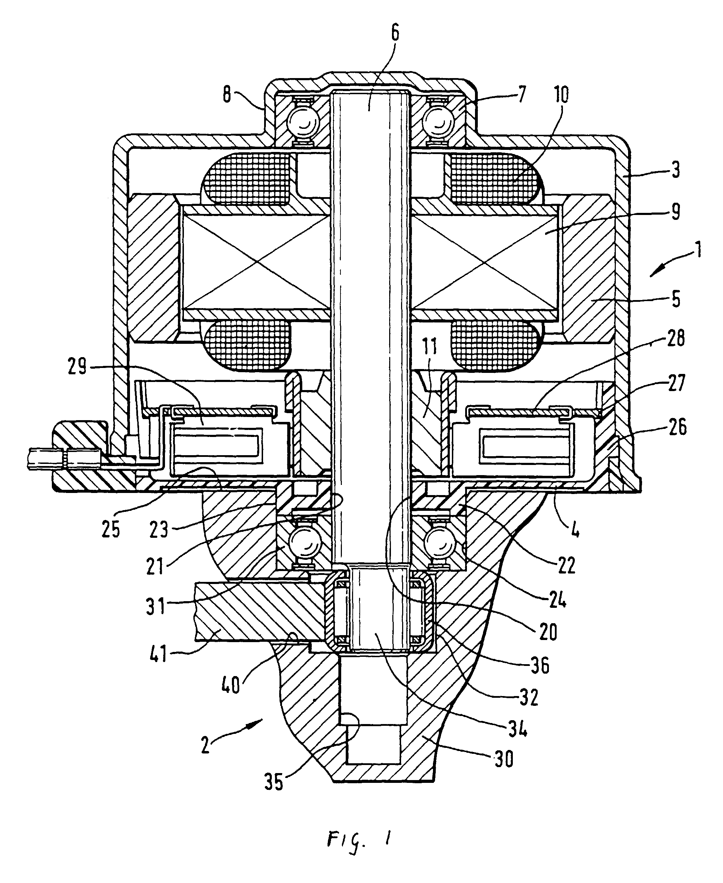

## Patentansprüche

1. Elektromotor (1) für ein Triebwerk, insbesondere für eine Pumpe (2) mit einer Welle (6), die in einem Motorgehäuse (3) angeordnet ist und durch einen kreisförmigen zentralen Durchbruch (20) in einem Schild (4) hindurchgeführt ist, wobei der Außenrand (26) des Schildes eine Führung für das Motorgehäuse (3) bildet und der Schild (4) eine radial ausgerichtete Anlagefläche (23) aufweist, um in radialer Richtung eine formschlüssige Verbindung mit dem Gehäuse (30) des Triebwerks (2) herzustellen, dadurch **gekennzeichnet**, daß der Durchmesser des Durchbruchs (20) dem Durchmesser der Welle (6) entspricht, die innere Fläche (21) des Durchbruchs (20) am Innenrand des Schildes (4) ein Lager für die Welle (6) bildet, und daß die Anlagefläche (23) am Außenrand eines Vorsprungs (22) am Schild (4) im Bereich des Durchbruches (20) ausgebildet ist.

2. Elektromotor nach Anspruch 1, dadurch **gekennzeichnet,** daß der Vorsprung (22) koaxial zur Welle (6) ausgebildet ist und die Form eines Ringes aufweist, wobei die äußere Mantelfläche (23) als Anlagefläche dient und die innere Mantelfläche (21) an der Mantelfläche der Welle (6) anliegt.

3. Elektromotor nach Anspruch 1 oder 2, dadurch **gekennzeichnet,** daß Teilstücke der Stirnfläche des Vorsprungs (22) zur Anlage an den Außenring des Hauptlagers (31) im Pumpengehäuse (30) ausgebildet sind.

4. Elektromotor nach Anspruch 3, dadurch **gekennzeichnet,** daß der Außendurchmesser des Vorsprungs (22) dem Außendurchmesser des Hauptlagers (31) entspricht.

5. Elektromotor nach Anspruch 1, dadurch **gekennzeichnet,** daß eine Bürstentrageplatte (28) auf einem Vorsprung (27) an dem kragenförmig ausgebildeten äußeren Rand des Schildes (4) aufliegt.

6. Elektromotor nach Anspruch 4, dadurch **gekennzeichnet,** daß die Bürste (29) an der Bürstentrageplatte (28) befestigt sind, wobei die Bürste zwischen Bürstentrageplatte (8) und Schild (4) angeordnet sind.

## Claims

1. Electric motor (1) for a drive mechanism, in particular, a pump (2) with a shaft (6) that is located in a motor housing (3) and runs through a circular, central opening (20) in a plate (4), wherein the outer edge (26) of the plate forms a guide for the motor housing (3) and the plate (4) features a radially aligned contact surface (23) to establish a positive connection in the radial direction with the housing (30) of the drive mechanism (2),
characterized in that the diameter of the opening (20) corresponds to the diameter of the shaft (6), the inner surface (21) of the opening (20) on the inner edge of the plate (4) forms a bearing for the shaft (6), and in that the contact surface (23) is formed at the outer edge of a protrusion (22) at the plate (4) in the area of the opening (20).

2. Electric motor as claimed in claim 1,
characterized in that the protrusion (22) is formed coaxially with respect to the shaft (6) and has the shape of a ring, wherein the outer peripheral surface (23) serves as a contact surface and the inner peripheral surface (21) is in contact with the surface of the shaft (6).

3. Electric motor as claimed in claim 1 or 2,
characterized in that sections of the front surface of the protrusion (22) are designed to bear against the outer ring of the main bearing (31) in the pump housing (30).

4. Electric motor as claimed in claim 3,
characterized in that the outer diameter of the protrusion (22) corresponds to the outer diameter of the main bearing (31).

5. Electric motor as claimed in claim 1,
characterized in that a brush support plate (28) rests on a protrusion (27) at the collar-shaped, outer edge of the plate (4).

6. Electric motor as claimed in claim 4,
characterized in that the brush (29) is mounted on the brush support plate (28), wherein the brushes are located between brush support plate (8) and plate (4).

## Revendications

1. Moteur électrique (1) pour un mécanisme d'entraînement, notamment pour une pompe (2), comprenant un arbre (6) qui est disposé dans un carter de moteur (3) et est dirigé à travers une ouverture centrale circulaire (20) dans un flasque (4), le bord extérieur (26) du flasque constituant un guide pour le carter de moteur (3) et le flasque (4) présentant une face d'application (23) orientée radialement, afin de réaliser avec le carter (30) du mécanisme d'entraînement (2) un assemblage par engagement positif en direction radiale, **caractérisé** en ce que le diamètre de l'ouverture (20) correspond au diamètre de l'arbre (6) et la face intérieure (21) de l'ouverture (20) forme, sur le bord intérieur du flasque (4), un palier pour l'arbre (6), et en ce que la face d'application (23) est réalisée sur le flasque (4) dans la région de l'ouverture (20), sur le bord extérieur d'une partie saillante (22).

2. Moteur électrique selon la revendication 1, **caractérisé** en ce que la partie saillane (22) est réalisée coaxialement à l'arbre (6) et présente une forme annulaire, la surface d'enveloppe extérieure (23) servant de face d'application et la surface d'enveloppe intérieure (21) s'appliquant contre la surface d'enveloppe de l'arbre (6).

3. Moteur électrique selon la revendication 1 ou 2, **caractérisé** en ce que des tronçons de la face frontale de la partie saillante (22) sont réalisés en vue de s'appliquer contre la bague extérieure du palier principal (31) prévu dans le carter de pompe (30).

4. Moteur électrique selon la revendication 3, **caractérisé** en ce que le diamètre extérieur de la partie saillante (22) correspond au diamètre extérieur du palier principal (31).

5. Moteur électrique selon la revendication 1, **caractérisé** en ce qu'une plaque porte-balais (28) repose sur une saillie (27) sur le bord extérieur, configuré en forme de collet, du flasque (4).

6. Moteur électrique selon la revendication 4, **caractérisé** en ce que les balais (29) sont fixés sur la plaque porte-balais (28), les balais étant disposés entre la plaque porte-balais (28) et le flasque (4).
